# EUROPEAN PATENT SPECIFICATION

(11) **EP 4 266 456 B1**
(45) Date of publication and mention of the grant of the patent: **29.07.2026**
(21) Application number: 22759954.5
(22) Date of filing: 14.02.2022
(51) Int. Cl.: H01M 10/6551, H01M 50/289, H01M 50/258, H01M 50/249, H01M 50/211, H01M 10/6568, H01M 10/6554, H01M 10/625, H01M 10/613, H01M 10/6556, H01M 10/653, H01M 10/647, H01M 10/6567, H01M 10/617

(54) **BATTERY MODULE AND BATTERY PACK INCLUDING THE SAME**
BATTERIEMODUL UND BATTERIEPACK DAMIT
MODULE DE BATTERIE ET BLOC-BATTERIE LE COMPRENANT

(30) Priority: 23.02.2021 KR 20210024303; 28.01.2022 KR 20220013634
(43) Date of publication of application: 25.10.2023
(73) Proprietor: LG Energy Solution, Ltd., Seoul 07335 (KR)
(72) Inventor: JANG, Sunghwan, Daejeon 34122 (KR); SEONG, Junyeob, Daejeon 34122 (KR); PARK, Myungki, Daejeon 34122 (KR); KIM, Min Seop, Daejeon 34122 (KR)
(74) Representative: Goddar, Heinz J.
(86) International application number: PCT/KR2022/002140
(87) International publication number: WO 2022/182036

(56) References cited:
- WO-A1-2020/262832
- CN-A- 110 718 723
- KR-A- 20150 044 631
- KR-A- 20200 001 705
- KR-A- 20200 011 787
- KR-A- 20200 142 446
- KR-B1- 101 579 483
- US-A1- 2015 318 587
- US-A1- 2020 067 155
- US-B2- 10 044 078

## Description

### [TECHNICAL FIELD]

The present disclosure relates to a battery module and a battery pack including the same, and more particularly, to a battery module having improved cooling performance and a battery pack including the same.

### [BACKGROUND ART]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, there is a growing need for development of the secondary battery.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, hardly exhibiting memory effects compared to nickel-based secondary batteries and thus being freely charged and discharged, and having very low self-discharge rate and high energy density.

Such lithium secondary battery mainly uses a lithium-based oxide and a carbonaceous material as a positive electrode active material and a negative electrode active material, respectively. The lithium secondary battery includes an electrode assembly in which a positive electrode plate and a negative electrode plate, each being coated with the positive electrode active material and the negative electrode active material, are disposed with a separator being interposed between them, and a battery case which seals and houses the electrode assembly together with an electrolyte solution.

Generally, the lithium secondary battery may be classified based on the shape of the exterior material into a can type secondary battery in which the electrode assembly is built into a metal can, and a pouch-type secondary battery in which the electrode assembly is built into a pouch of an aluminum laminate sheet.

In the case of a secondary battery used for small-sized devices, two to three battery cells are disposed, but in the case of a secondary battery used for a middle or large-sized device such as an automobile, a battery module in which a large number of battery cells are electrically connected is used. In such a battery module, a large number of battery cells are connected to each other in series or parallel to form a cell assembly, thereby improving capacity and output. In addition, one or more battery modules can be mounted together with various control and protection systems such as a battery management system (BMS) and a cooling system to form a battery pack.

When the temperature of the secondary battery rises higher than an appropriate temperature, the performance of the secondary battery may be deteriorated, and in the worst case, there is also a risk of an explosion or ignition. In particular, a large number of secondary batteries, that is, a battery module or a battery pack having battery cells, can add up the heat generated from the large number of battery cells in a narrow space, so that the temperature can rise more quickly and excessively. In other words, a battery module in which a large number of battery cells are stacked, and a battery pack equipped with such a battery module can obtain high output, but it is not easy to remove heat generated from the battery cells during charging and discharging. When the heat dissipation of the battery cell is not properly performed, deterioration of the battery cells is accelerated, the lifespan is shortened, and the possibility of explosion or ignition increases.

Moreover, in the case of a middle or large-sized battery module included in a vehicle battery pack, it is frequently exposed to direct sunlight and can be subjected to high-temperature conditions such as summer or desert areas.

Therefore, when a battery module or a battery pack is configured, it may be very important to stably and effectively ensure the cooling performance.

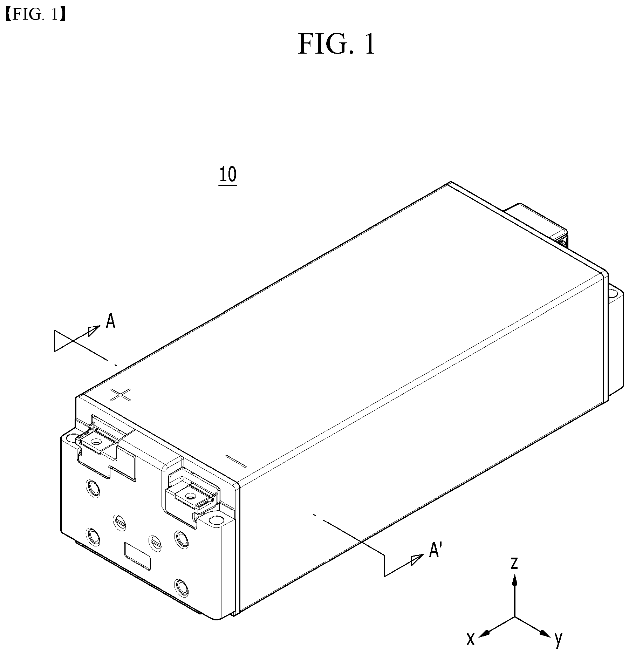

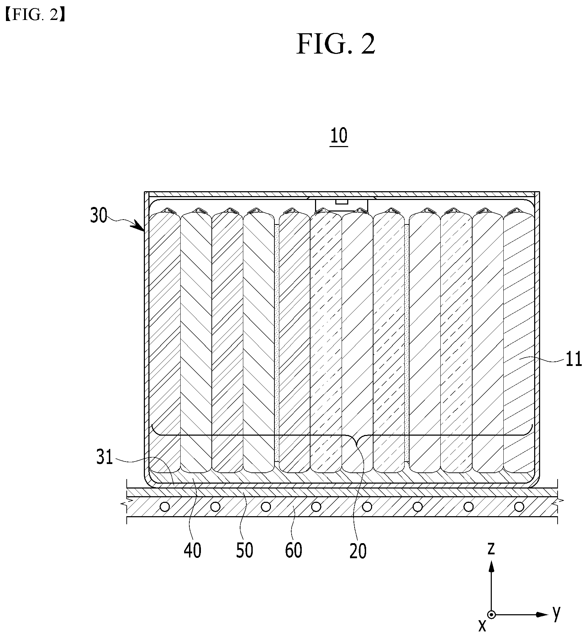

Fig. 1 is a perspective view showing a conventional battery module. Fig. 2 is a cross-sectional view showing a cross section taken along the cutting line A-A' of Fig. 1. In particular, a heat transfer member and a heat sink located under the battery module are further shown in Fig. 2.

Referring to Figs. 1 and 2, the conventional battery module 10 is configured such that a plurality of battery cells 11 are stacked to form a battery cell stack 20, and the battery cell stack 20 is housed in the module frame 30.

As described above, since the battery module 10 includes a plurality of battery cells 11, it generates a large amount of heat in a charge and discharge process. As a cooling means, the battery module 10 may include a thermal conductive resin layer 40 that is located between the battery cell stack 20 and the bottom part 31 of the module frame 30. In addition, when the battery module 10 is mounted on the pack frame to form a battery pack, a heat transfer member 50 and a heat sink 60 may be sequentially located under the battery module 10. The heat transfer member 50 may be a heat dissipation pad. The heat sink 60 may have a coolant flow passage formed therein.

The heat generated from the battery cell 11 is transmitted to the outside through the thermal conductive resin layer 40, the bottom portion 31 of the module frame 30, the heat transfer member 50, and the heat sink 60 in this order.

By the way, in the case of the conventional battery module 10, the heat transfer path is complicated as described above and thus, it is difficult to effectively transfer the heat generated from the battery cell 11. The module frame 30 itself may deteriorate heat transfer properties, and a fine air layer such as an air gap, which can be formed in the space between the module frame 30, the heat transfer member 50, and the heat sink 60. may also be a factor that deteriorates the heat transfer properties.

As for the battery module, since other demands such as an increase in capacity are also continuing, it can be said that it is practically necessary to develop a battery module capable of satisfying these various requirements while improving the cooling performance.

The document US 2020/067155 A1 discloses a battery module including a heat sink unit within a battery housing unit, wherein a refrigerant flow passage is formed within the heat sink unit.

The document US 10 044 078 B2 discloses a secondary battery comprising a heat sink including two or more separated channels.

### [DETAILED DESCRIPTION OF THE INVENTION]

### [Technical Problem]

It is an object of the present disclosure to provide a battery module having improved cooling performance and a battery pack including the same.

However, the problem to be solved by embodiments of the present disclosure is not limited to the above-described problems, and can be variously expanded within the scope of the technical idea included in the present disclosure.

### [Technical Solution]

According to one embodiment of the present disclosure, there is provided a battery module comprising: a battery cell stack in which a plurality of battery cells including electrode leads protruding in mutually opposite directions are stacked; a module frame that houses the battery cell stack; and a first heat sink and a second heat sink that are located under the bottom part of the module frame; wherein a coolant flow path is formed between the first heat sink and the bottom part of the module frame and between the second heat sink and the bottom part of the module frame, respectively, and wherein the coolant flow path formed by the first heat sink and the coolant flow path formed by the second heat sink are separated from each other.

The first heat sink and the second heat sink are located separately from each other along a direction parallel to a direction in which the electrode leads protrude.

The battery module may further comprise a first thermal conductive resin layer and a second thermal conductive resin layer that are located between the lower surface of the battery cell stack and the bottom part of the module frame.

The first thermal conductive resin layer and the second thermal conductive resin layer may be located separately from each other along a direction parallel to a direction in which the electrode leads protrude.

The first heat sink may be located at a portion corresponding to the first thermal conductive resin layer, and the second heat sink is located at a portion corresponding to the second thermal conductive resin layer, with respect to a direction perpendicular to one surface of the bottom part of the module frame.

The first heat sink may comprise a first lower plate that is joined to the bottom part of the module frame, and a first recessed part that is recessed in a lower direction from the first lower plate.

The battery module may further comprise a thermal conductive resin layer that is located between the lower surface of the battery cell stack and the bottom part of the module frame.

The thermal conductive resin layer may cover a region where the first heat sink is located and a region where the second heat sink is located, with respect to a direction perpendicular to one surface of the bottom part of the module frame.

The module frame may comprise first module frame protrusion part that is formed by protruding a part of the bottom part of the module frame, and a coolant injection port may be connected to any one of the first module frame protrusion parts and a coolant discharge port may be connected to the other one.

The first heat sink may comprise first heat sink protrusion parts that protrudes from one side of the first heat sink to portions where the first module frame protrusion parts are located.

The second heat sink may comprise a second lower plate that is joined to the bottom part of the module frame, and a second recessed part that is recessed in a lower direction from the second lower plate.

The module frame may comprise second module frame protrusion parts formed by protruding a part of the bottom part of the module frame, and a coolant injection port may be connected to any one of the second module frame protrusion parts, and a coolant discharge port may be connected to the other one.

The second heat sink may comprise second heat sink protrusion parts that protrudes from one side of the second heat sink to portions where the second module frame protrusion parts are located.

According to another embodiment of the present disclosure, there is provided a battery pack comprising: the battery module; a first pack coolant supply tube that supplies a coolant to a coolant flow path formed by a first heat sink; a first pack coolant discharge tube that discharges the coolant from the coolant flow path formed by the first heat sink; a second pack coolant supply tube that supplies a coolant to the coolant flow path formed by the second heat sink; and a second pack coolant discharge tube that discharges the coolant from the coolant flow path formed by the second heat sink.

### [Advantageous Effects]

According to embodiments of the present disclosure, the thermal conductive resin layer and the heat sink are concentrically arranged in the portion where heat generation is excessive in the battery cell, thereby capable of improving the cooling performance and reducing the temperature deviation of the battery cell.

Additionally, the length of the coolant flow path of the heat sink relative to the cooling area of the battery module can be shortened, and thus the pressure drop of the coolant flow path can be improved.

Moreover, the cooling performance can be improved through the integrated structure of the module frame and the heat sink.

Further, by removing unnecessary cooling structures, it is possible to reduce costs, improve space utilization, and increase the capacity or output of the battery module.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view showing a conventional battery module;
Fig. 2 is a cross-sectional view showing a cross section taken along the cutting line A-A' of Fig. 1;
Fig. 3 is a perspective view showing a battery module according to an embodiment of the present disclosure;
Fig. 4 is an exploded perspective view of the battery module of Fig. 3;
Fig. 5 is a perspective view showing one of the battery cells included in the battery module of Fig. 4;
Fig. 6 is a perspective view showing a first heat sink and a second heat sink included in the battery module of Fig. 4;
Fig. 7 is a cross-sectional view showing a cross section taken along the cutting line I-I' of Fig. 6;
Fig. 8 is a perspective view showing a state in which the battery module is viewed from the bottom to the top so that the lower surface of the battery module of Fig. 3 can be seen;
Fig. 9 is a perspective view showing a lower frame, a first thermal conductive resin layer, and a second thermal conductive resin layer included in the battery module of Fig. 4;
Fig. 10 is a cross-sectional view showing a cross-section taken along the cutting line B-B' of Fig. 3;
Fig. 11 is a cross-sectional view showing a cross-section taken along the cutting line C-C' of Fig. 3;
Fig. 12 is a perspective view showing a battery module, a pack coolant supply tube, and a pack coolant discharge tube according to an embodiment of the present disclosure;
Fig. 13 is an exploded perspective view showing a battery module according to another embodiment of the present disclosure; and
Fig. 14 is a perspective view showing a lower frame and a thermal conductive resin layer included in the battery module of Fig. 13.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of parts not related to the description will be omitted herein for clarity, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the description, when a portion is referred to as "including" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

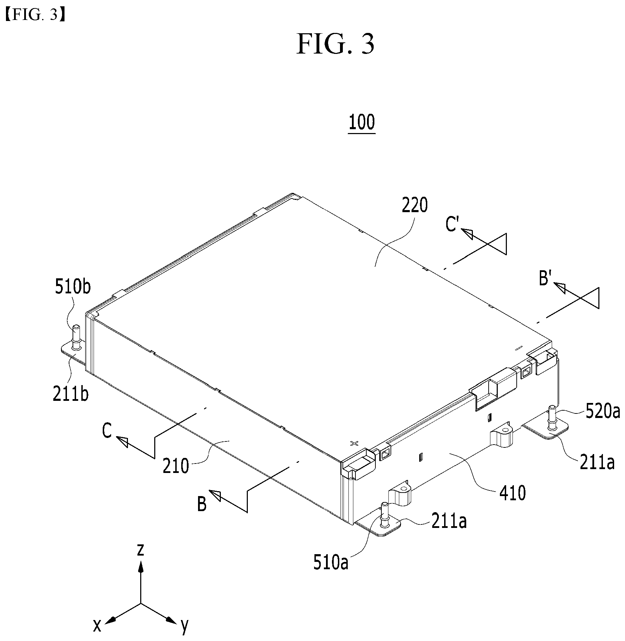

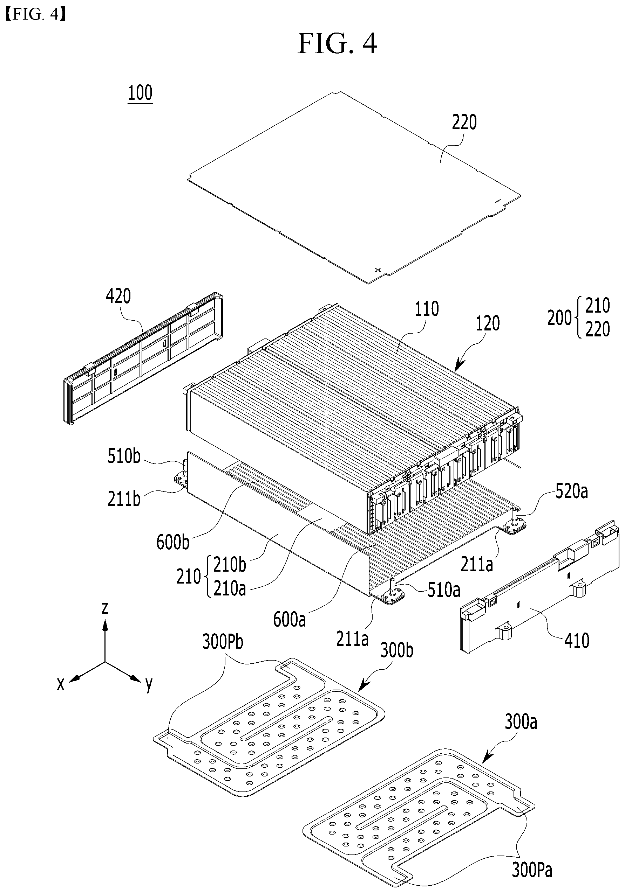

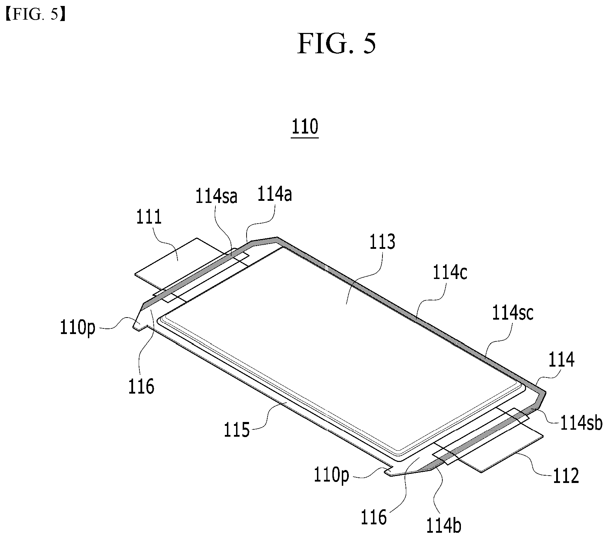

Fig. 3 is a perspective view showing a battery module according to an embodiment of the present disclosure. Fig. 4 is an exploded perspective view of the battery module of Fig. 3. Fig. 5 is a perspective view showing one of the battery cells included in the battery module of Fig. 4.

Referring to Figs. 3 to 5, a battery module 100 includes a battery cell stack 120 in which a plurality of battery cells 110 are stacked; a module frame 200 that houses the battery cell stack 120; and a first heat sink 300a and a second heat sink 300b that are located under the bottom part 210a of the module frame.

First, the battery cell 110 is preferably a pouch type battery cell, and may be formed in a rectangular sheet-like structure. For example, the battery cell 110 according to the present embodiment has a structure in which two electrode leads 111 and 112 face each other and protrude from one end 114a and the other end 114b of a cell body 113, respectively. That is, the battery cell 110 includes electrode leads 111 and 112 protruding in mutually opposite directions. More specifically, the first and second electrode leads 111 and 112 are connected to an electrode assembly (not shown) and protrude from the electrode assembly (not shown) to the outside of the battery cell 110.

Meanwhile, the battery cell 110 can be produced by joining both end parts 114a and 114b of a cell case 114 and one side part 114c connecting them in a state in which an electrode assembly (not shown) is housed in a cell case 114. In other words, the battery cell 110 according to the present embodiment has a total of three sealing parts 114sa, 114sb and 114sc, the sealing parts 114sa, 114sb and 114sc have a structure sealed by a method such as heat fusion, and the remaining other side part may be composed of a connection part 115. The cell case 114 may be composed of a laminate sheet including a resin layer and a metal layer.

In addition, the connection part 115 may extend long along one edge of the battery cell 110, and a bat-ear 110p may be formed at an end part of the connection part 115. Further, while the cell case 114 is sealed with the protruding electrode leads 111 and 112 being interposed at ends thereof, a terrace part 116 may be formed between the electrode leads 111 and 112 and the cell body 113. That is, the battery cell 110 includes a terrace part 116 formed to extend from the cell case 114 in a protruding direction of the electrode leads 111 and 112.

The battery cell 110 may be composed by a plurality of numbers, and the plurality of battery cells 110 may be stacked so as to be electrically connected to each other, thereby forming a battery cell stack 120. Particularly, as shown in Fig. 4, a plurality of battery cells 110 may be stacked along a direction parallel to the x-axis. Thereby, the electrode leads 111 and 112 may protrude in the y-axis direction and the -y-axis direction, respectively. Although not specifically shown in the figure, an adhesive member may be located between the battery cells 110. Thereby, the battery cells 110 may be adhered to each other to form the battery cell stack 120.

The battery cell stack 120 according to the present embodiment may be a large-area module in which the number of battery cells 110 is larger than that of the conventional case. Specifically, 32 to 48 battery cells 110 can be included per battery module 100. In the case of such a large-area module, the horizontal length of the battery module becomes long. Here, the horizontal length may mean a length in the direction in which the battery cells 110 are stacked, that is, in a direction parallel to the x-axis.

On the other hand, when the battery cell 110 is repeatedly charged and discharged, heat is generated. Among them, a large amount of heat is generated in the portions adjacent to the electrode leads 111 and 112. That is, more heat is generated during charge and discharge as approaching the terrace part116 rather than the central part of the cell body 113.

The module frame 200 for housing the battery cell stack 120 may include a lower frame 210 and an upper cover 220.

The lower frame 210 may include a bottom part 210a and two side surface parts 210b extending upward at both ends of the bottom part 210a. The bottom part 210a may cover the lower surface of the battery cell stack 120, and the two side surface parts 210b may cover both side surfaces of the battery cell stack 120. Here, the lower surface of the battery cell stack 120 refers to a surface in the -z-axis direction, and both side surfaces of the battery cell stack 120 refer to surfaces in the x-axis and -x-axis directions. However, these are surfaces mentioned for convenience of explanation, and may differ depending on the position of a target object or the position of an observer, and the like.

The upper cover 220 may have a single plate-shaped structure that wraps the remaining upper surface (surface in the z-axis direction) excluding the lower surface and the both side surfaces of the battery cell stack 120 that is wrapped by the lower frame 210. The upper cover 220 and the lower frame 210 are joined by welding in the state contacting with mutually corresponding edge parts, thereby forming a structure wrapping the battery cell stack 120 vertically and horizontally. The battery cell stack 120 can be physically protected through the upper cover 220 and the lower frame 210. For this purpose, the upper cover 220 and the lower frame 210 may include a metal material to have a predetermined strength.

Meanwhile, although not specifically shown in the figure, the module frame 100 according to a modified embodiment of the present disclosure may be a mono frame in the form of a metal plate in which the upper surface, the lower surface, and both side surfaces are integrated. That is, this frame may have a structure in which the upper surface, the lower surface, and both side surfaces are integrated by being manufactured by extrusion molding, rather than a structure in which the lower frame 210 and the upper cover 220 are joined with each other.

Meanwhile, the battery module 100 according to the present embodiment may include a first end plate 410 and a second end plate 420 each covering the front surface and the rear surface of the battery cell stack 120. Here, the front surface of the battery cell stack 120 refers to a surface in the y-axis direction, and the rear surface of the battery cell stack 120 refers to a surface in the - y-axis direction.

The first end plate 410 and the second end plate 420 are located at both open sides of the module frame 200 so that they can be formed so as to cover the battery cell stack 120. Each of the first end plate 410 and the second end plate 420 may be joined by welding in the state contacting with the corresponding edges of the module frame 200. The first end plate 410 and the second end plate 420 can physically protect the battery cell stack 120 and other electrical components from external impacts.

Meanwhile, although not specifically shown in the figure, a bus bar frame to which the bus bar is mounted and an insulating cover for electrical insulation can be located between the battery cell stack 120 and the end plates 410 and 420.

Next, the first and second heat sinks according to the present embodiment will be described in detail with reference to Figs. 4 and 6 to 9.

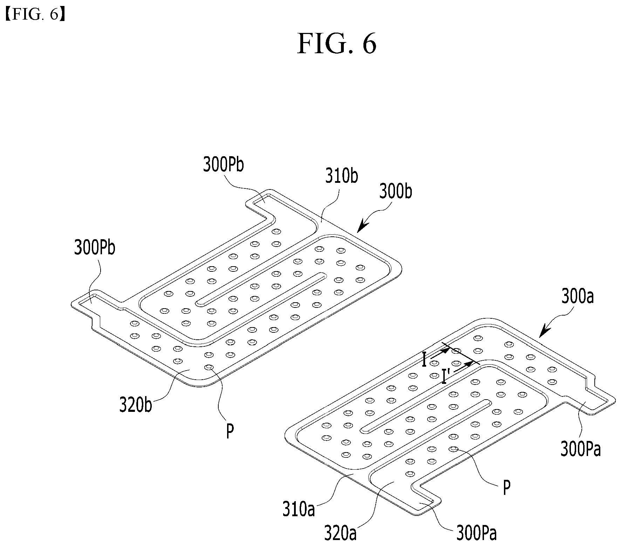

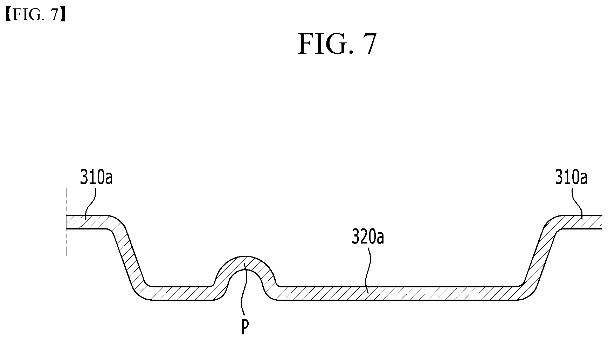

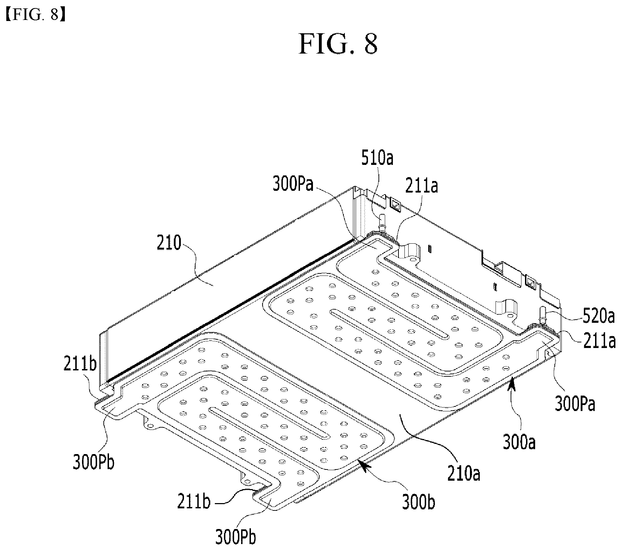

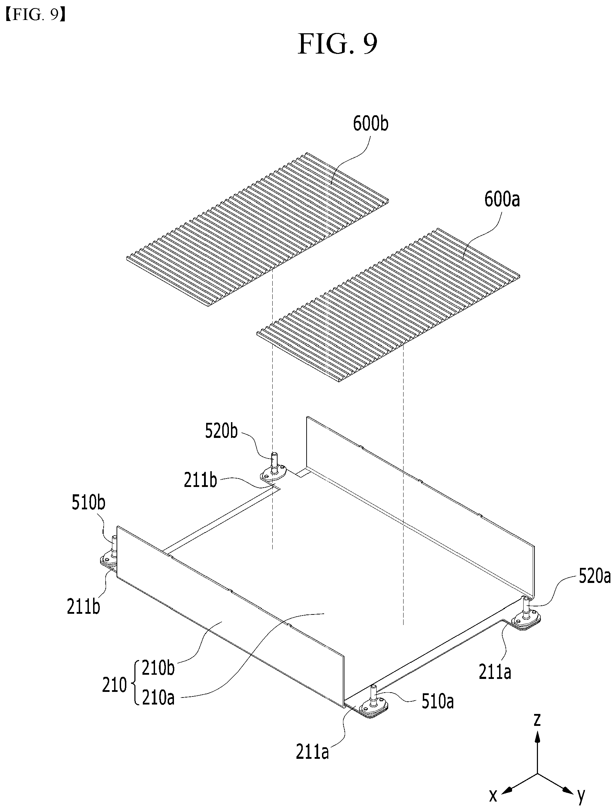

Fig. 6 is a perspective view showing a first heat sink and a second heat sink included in the battery module of Fig. 4. Fig. 7 is a cross-sectional view showing a cross section taken along the cutting line I-I' of Fig. 6. Fig. 8 is a perspective view showing a state in which the battery module is viewed from the bottom to the top so that the lower surface of the battery module of Fig. 3 can be seen. Fig. 9 is a perspective view showing a lower frame, a first thermal conductive resin layer, and a second thermal conductive resin layer included in the battery module of Fig. 4.

Referring to Fig. 4 and 6 to 9, the first heat sink 300a and the second heat sink 300b according to the present embodiment are located under the bottom part 210a of the module frame 200, and a coolant flow path is formed between the first heat sink 300a and the bottom part 210a of the module frame 200 and between the second heat sink 300b and the bottom part 210a of the module frame 200, respectively. The coolant flow path formed by the first heat sink 300a and the coolant flow path formed by the second heat sink 300b are separated from each other. In other words, the coolant flowing inside the first heat sink 300a and the coolant flowing inside the second heat sink 300b flow along different paths from each other without mixing. Here, the coolant is a medium for cooling, and is not particularly limited, but may be a cooling water.

The first heat sink 300a and the second heat sink 300b are located separately from each other in a direction parallel to the direction in which the electrode leads 111 and 112 protrude. As described above, in the battery cell stack 120, the electrode leads 111 and 112 can be protruded in the y-axis direction and the -y-axis direction, respectively. The first heat sink 300a and the second heat sink 300b may be located separately from each other along a direction parallel to the y-axis to comply with the protruding directions of the electrode leads 111 and 112. In particular, the first heat sink 300a and the second heat sink 300b may be located so as to be adjacent to both sides facing each other at the bottom part 210a of the module frame 200, respectively.

Referring to Fig. 5, as described above, in the battery cell 110, a portion closer to the terrace part 116 than the central part of the cell body 113 generates more heat during charge and discharge. With reference to the battery cell stack 120, a large amount of heat is generated in a portion adjacent to the portion where the electrode leads 111 and 112 protrude. As the charge and discharge are repeated, the temperature deviation between the respective portions of the battery cell 110 becomes larger. Since this temperature deviation leads to deterioration of battery performance, it is important to eliminate the temperature deviation.

Referring to Figs. 4 and 6 together with Fig. 5, the battery module 100 according to the present embodiment attempted to concentrate the cooling function and eliminate the temperature deviation of the battery cell 110 by providing the first heat sink 300a and the second heat sink 300b in a portion where heat generation is excessive in the battery cell 110. Thereby, in the battery module 100 according to the present embodiment, heat dissipation can be effectively made at both end parts of the battery cell 110 where heat generation is excessive, and the temperature deviation between the respective portions of the battery cell 110 can be minimized.

Next, specific structures of the first heat sink 300a and the second heat sink 300b will be described.

The first heat sink 300a includes a first lower plate 310a that is joined to the bottom part 210a of the module frame 200, and a first recessed part 320a that is recessed in a lower direction from the second lower plate 310a. The first lower plate 310a forms a skeleton of the first heat sink 300a and can be directly joined to the bottom part 210a of the module frame 200 by a welding method. Specifically, as shown in Fig. 7, the first recessed part 320a is a part that is recessed in a lower direction, and a path through which the coolant flows may be formed in the inside thereof.

The first recessed part 320a may be a tube in which a cross section cut in the xz plane or the yz plane perpendicular to the direction in which the coolant flow path extends is U-shaped, and the bottom part 210a may be located on the open upper side of the U-shaped tube. That is, as shown in Fig. 7, the first recessed part 320a may be a tube in which a cross section is U-shaped. A second recessed part 320b described later also has a similar structure. As the first lower plate 310a comes into contact with the bottom part 210a, the space between the first recessed part 320a and the bottom part 210a becomes a region through which the coolant flows, that is, a flow path of the coolant. Thereby, the bottom part 210a of the module frame 200 may be in direct contact with the coolant.

Meanwhile, the module frame 200 may include first module frame protrusion parts 211a formed by protruding a part of the bottom part 210a of the module frame 200. Specifically, the first module frame protrusion parts 211a may be formed such that a part of the bottom part 210a of the module frame 200 extends and pass through the first end plate 410. In particular, at least two first module frame protrusion parts 211a may be formed, and one of them is connected to a coolant injection port 510a, and a coolant discharge port 520a may be connected to the other one. The coolant injection port 510a and the coolant discharge port 520a may be connected to a first pack coolant supply tube and a first pack coolant discharge tube, each of which will be described later.

The first heat sink 300a may include first heat sink protrusion parts 300Pa that protrudes from one side of the first heat sink 300a to a portion where the first module frame protrusion parts 211a are located. At least two first module frame protrusion parts 211a may be formed, and the first heat sink protrusion parts 300Pa may be formed to correspond to each of the first module frame protrusion parts 211a.

The first recessed part 320a may be connected from one of the first heat sink protrusions 300Pa to the other one. The coolant supplied via the coolant injection port 510a passes between the first module frame protrusion part 211a and the first heat sink protrusion part 300Pa, and first flows into the space between the first recessed part 320a and the bottom part 210a. After that, the coolant moves along the first recessed part 320a and passes through the other first module frame projection part 211a and the first heat sink projection part 300Pa to be discharged via the coolant discharge port 520a.

Meanwhile, the second heat sink 300b includes a second lower plate 310b that is joined to the bottom part 210a of the module frame 200, and a second recessed part 320b that is recessed in a lower direction from the second lower plate 310b. The second lower plate 310b forms a skeleton of the second heat sink 300b and may be directly joined to the bottom part 210a of the module frame 200 by a welding method. The second recessed part 320b is a part recessed in the lower direction, and a path through which the coolant flows may be formed in the inside thereof.

The second recessed part 320b may be a tube in which a cross-section cut in the xz plane or the yz plane vertically with respect to the direction in which the coolant flow path extends is U-shaped, and the bottom part 210a may be located on the open upper side of the U-shaped tube. As the second lower plate 310b comes into contact with the bottom part 210a, the space between the second recessed part 320b and the bottom part 210a becomes a region through which the coolant flows, that is, a flow path of the coolant. Thereby, the bottom part 210a of the module frame 200 may be in direct contact with the coolant.

Meanwhile, the module frame 200 may include second module frame protrusion parts 211b formed by protruding a part of the bottom part 210a of the module frame 200. Specifically, the second module frame protrusion parts 211b may be formed such that a part of the bottom part 210a of the module frame 200 extends and pass through the second end plate 420. In particular, at least two second module frame protrusion parts 211b may be formed, and one of them may be connected to a coolant injection port 510b, and the other one may be connected to a coolant discharge port 520b. The coolant injection port 510b and the coolant discharge port 520b may be connected to a second pack coolant supply tube and a second pack coolant discharge tube, each of which will be described later. At this time, the second module frame protrusion parts 211b may be formed on sides of the bottom part 210a on which the first module frame protrusion parts 211a are not formed. More specifically, the second module frame protrusion parts 211b may be formed on a side opposite to the side of the bottom part 210a on which the first module frame protrusion parts 211a are formed.

The second heat sink 300b may include second heat sink protrusions parts 300Pb that protrude from one side of the second heat sink 300b to a portion where the second module frame protrusion parts 211b are located. At least two second module frame protrusion parts 211b can be formed, and the second heat sink protrusion parts 300Pb may be formed so as to correspond to each of the second module frame protrusion parts 211b.

The second recessed part 320b may be connected from one of the second heat sink protrusion parts 300Pb to the other one. The coolant supplied via the coolant injection port 510b passes between the second module frame protrusion part 211b and the second heat sink protrusion part 300Pb, and first flows into the space between the second recessed part 320b and the bottom part 210a. After that, the coolant moves along the second recessed part 320b and passes through the other second module frame protrusion 211b and the second heat sink protrusion 300Pb to be discharged via the coolant discharge port 520b.

In this manner, the coolant flow path formed by the first recessed part 320a of the first heat sink 300a, and the coolant flow path formed by the second recessed part 320b of the second heat sink 300b are separated from each other. In particular, as shown in Fig. 8, instead of covering the entire lower surface of the bottom part 210a with a single heat sink, the first heat sink 300a and the second heat sink 300b separated from each other are separately covered. If only a single heat sink is disposed, the path until the coolant flown in once is discharged becomes longer. If the path becomes long, there is a problem that the pressure in the latter half of the coolant flow path decreases. Further, in the latter half of the coolant flow path, since heat exchange via the coolant has already proceeded in considerable portion, the cooling performance is deteriorated.

On the other hand, in the battery module 100 according to the present embodiment, the coolant path of each heat sink is shortened by disposing the first and second heat sinks 300a and 300b. Therefore, the pressure drop problem in the latter half can be solved, and the cooling performance of each heat sink can be concentrated on the area where heat generation is excessive, so that more effective heat dissipation is possible. In particular, as in the present embodiment, in the case of a large-area module in which the number of battery cells 110 is larger than that of the conventional case, it is more effective in terms of pressure maintenance and cooling performance of the coolant flow path than when only a single heat sink is disposed.

Further, when a large-area battery module including a single heat sink is disposed in a device such as an automobile, a large-capacity coolant pump is required to supply and discharge coolant into the single heat sink. Since such a large-capacity coolant pump occupies a large space, the space efficiency inside a device such as an automobile is deteriorated.

On the other hand, when the separated first and second heat sinks 300a and 300b are included as in the battery module according to the present embodiment, equivalent heat exchange performance and cooling performance can be realized even with a coolant pump with a smaller capacity. That is, since a coolant pump with a smaller capacity can be used, there is an advantage that the space inside a device such as an automobile can be efficiently utilized.

Meanwhile, at least one of the first recessed part 320a and the second recessed part 320b may have a protrusion pattern P protruding in an upper direction. As in the battery cell stack 120 according to the present embodiment, in the case of a large-area battery module in which the number of stacked battery cells increases significantly compared to the conventional case, the width of the coolant flow path may be formed wider and thus, the temperature deviation may be more excessive. The protrusion pattern P can generate the effect of substantially reducing the width of the cooling flow path, minimize the pressure drop, and at the same time, reduce the temperature deviation between the widths of the coolant flow paths. Therefore, a uniform cooling effect can be realized.

Next, the first thermal conductive resin layer and the second thermal conductive resin layer according to an embodiment of the present disclosure will be described in detail with reference to Figs. 9 to 11.

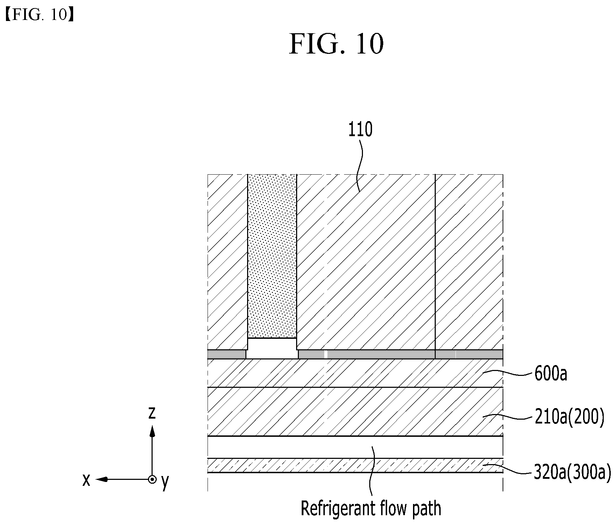

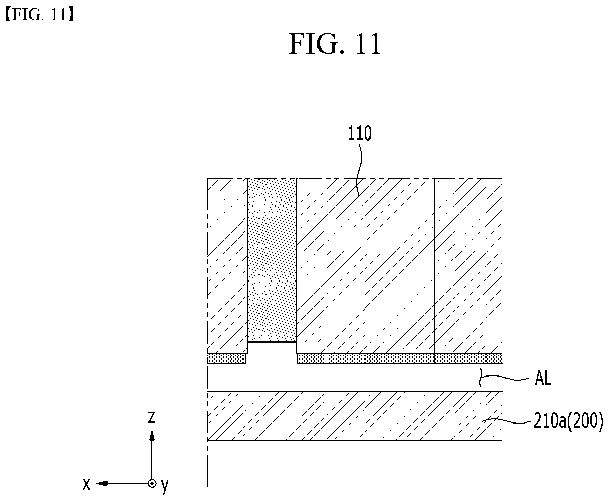

Fig. 10 is a cross-sectional view showing a cross-section taken along the cutting line B-B' of Fig. 3. Fig. 11 is a cross-sectional view showing a cross-section taken along the cutting line C-C' of Fig. 3.

Referring to Figs. 3, 4 and 9 to 11 together, the battery module 100 according to the present embodiment may further include a first thermal conductive resin layer 600a and a second thermal conductive resin layer 600b that are located between the lower surface of the battery cell stack 120 and the bottom part 210a of the module frame 200.

The first thermal conductive resin layer 600a and the second thermal conductive resin layer 600b may include a thermal conductive resin. The thermal conductive resin may be applied to the bottom part 210a of the module frame 200 to form a first thermal conductive resin layer 600a and a second thermal conductive resin layer 600b. The thermal conductive resin may include a thermal conductive adhesive material, and specifically, may include at least one of a silicone material, a urethane material, and an acrylic material. The thermal conductive resin is a liquid during application but is cured after application, so that it can perform the role of fixing one or more battery cells 110 constituting the battery cell stack 120. Further, since the thermal conductive resin has excellent heat transfer properties, heat generated from the battery cell 100 can be quickly transferred to the outside of the battery module 100, thereby preventing overheating of the battery pack.

The first thermal conductive resin layer 600a and the second thermal conductive resin layer 600b may be located separately from each other in a direction parallel to the direction in which the electrode leads 111 and 112 protrude. As described above, in the battery cell stack 120, the electrode leads 111 and 112 may protrude in the y-axis direction and the -y-axis direction, respectively. The first thermal conductive resin layer 600a and the second thermal conductive resin layer 600b may be located separately from each other in a direction parallel to the y-axis to comply with the protruding directions of the electrode leads 111 and 112. In particular, the first thermal conductive resin layer 600a and the second thermal conductive resin layer 600b may be located so as to be adjacent to both sides facing each other at the bottom part 210a of the module frame 200, respectively. Further, with respect to a direction perpendicular to one surface of the bottom part 210a of the module frame 200, the first heat sink 300a may be located at a portion corresponding to the first thermal conductive resin layer 600a, and the second heat sink 300b may be located at a portion corresponding to the second thermal conductive resin layer 600b.

Similarly to the first heat sink 300a and the second heat sink 300b, the battery module 100 according to the present embodiment provides the first thermal conductive resin layer 600a and the second thermal conductive resin layer 600b in a portion where heat generation is excessive in the battery cell 110, thereby attempting to concentrate the cooling function and eliminate the temperature deviation of the battery cell 110. Thereby, in the battery module 100 according to the present embodiment, heat dissipation can be effectively made at both end parts of the battery cell 110 where heat generation is excessive, and the temperature deviation between the respective parts of the battery cell 110 can be minimized.

Specifically, as shown in Fig. 10, the heat generated in the portion where the heat generation is excessive in the battery cell 110 passes through the first heat conductive resin layer 600a, the bottom part 210a of the module frame 200, and the first heat sink 300a in this order to be discharged to the outside. Although not specifically shown in the figure, even on the opposite side, similarly, heat passes through the second thermal conductive resin layer 600b, the bottom part 210a of the module frame 200, and the second heat sink 300b in this order to be discharged to the outside.

On the other hand, as shown in Fig. 11, in the portion where the heat of the battery cell 110 is relatively weak, the thermal conductive resin is not applied, and thus a kind of air layer AL may be formed between the battery cell 110 and the bottom part 210a of the module frame 200. The air layer AL may function as a heat insulating layer and can relatively limit the heat discharge. In addition, a separate heat sink is not disposed in the corresponding part.

As described above, the degree of heat discharge is designed differently for each of the portion where heat generation of the battery cell 110 is excessive and the portion where the heat generation is insufficient, thereby attempting to eliminate the temperature deviation between the respective parts of the battery cell 110.

Considering in a comprehensive way, first heat sink 300a and the second heat sink 300b can are disposed so as to correspond to each of the portions to which the first thermal conductive resin layer 600a and the second thermal conductive resin layer 600b are applied, whereby it is possible to maximize the cooling performance of the portion where heat generation of the battery cell stack 120 is excessive. Further, in the portion where heat generation of the battery cell stack 120 is weak, it was attempted to relatively limit the cooling performance to balance the temperature deviation.

On the other hand, referring back to Figs. 2, 6, 7 and 10, in the case of the conventional battery module 10, the coolant flow path is formed inside the heat sink 60, whereas the first heat sink 300a and the second heat sink 300b according to the present embodiment include the first recessed part 320a and the second recessed part 320b that are opened in their upper part, so that the bottom part 210a of the module frame 200 is in direct contact with the coolant. That is, the bottom part 210a of the module frame 200 is constituted by an upper plate of each of the first heat sink 300a and the second heat sink 300b. Thereby, the battery module 100 according to the present embodiment has an advantage that more direct heat transfer can be made as compared with the conventional heat sink 60.

Next, a battery pack according to an embodiment of the present disclosure will be described in detail with reference to Figs. 4, 8, 9 and 12.

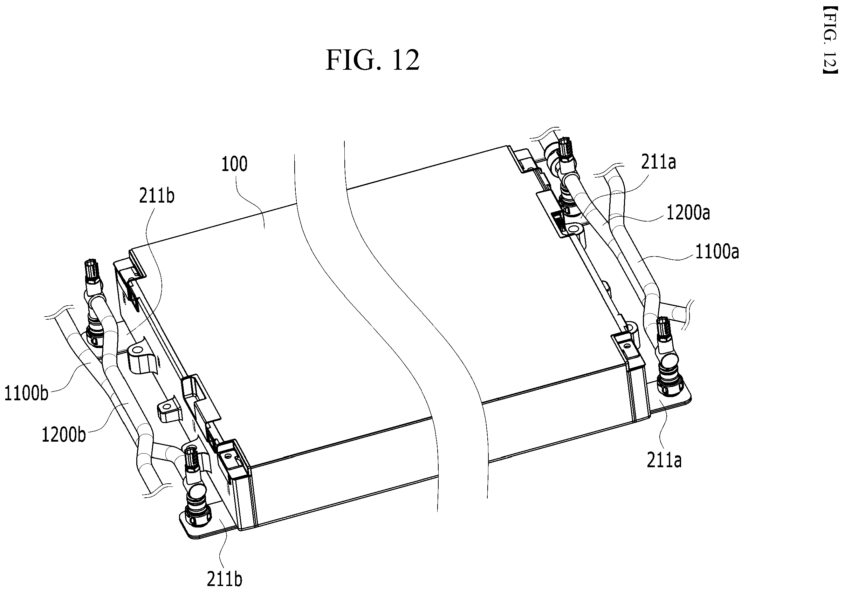

Fig. 12 is a perspective view showing a battery module, a pack coolant supply tube, and a pack coolant discharge tube according to an embodiment of the present disclosure.

Referring to Figs. 4, 8, 9 and 12, the battery pack according to an embodiment of the present disclosure includes a battery module 100, a first pack coolant supply tube 1100a, a first pack coolant discharge tube 1200a, a second pack coolant supply tube 1100b and a second pack coolant discharge tube 1200b.

The first pack coolant supply tube 1100a supplies a coolant to the coolant flow path formed by the first heat sink 300a. Specifically, the first pack coolant supply tube 1100a may be connected to the coolant injection port 510a. The coolant that has moved through the first pack coolant supply tube 1100a passes through the coolant injection port 510a and between the first module frame protrusion part 211a and the first heat sink protrusion part 300Pa in this order and flows into the first heat sink 300a.

The first pack coolant discharge tube 1200a discharges the coolant from the coolant flow path formed by the first heat sink 300a. Specifically, the first pack coolant discharge tube 1200a may be connected to the coolant discharge port 520a. The coolant flowing into the first heat sink 300a passes through between the other first module frame protrusion part 211a and the first heat sink protrusion part 300Pa and through the coolant discharge port 520a in this order to be discharged to the first pack coolant discharge tube 1200a.

Meanwhile, the second pack coolant supply tube 1100b supplies a coolant to the coolant flow path formed by the second heat sink 300b. Specifically, the second pack coolant supply tube 1100b may be connected to the coolant injection port 510b. The coolant that has moved through the second pack coolant supply tube 1100b passes through the coolant injection port 510b and between the second module frame protrusion port 211b and the second heat sink protrusion part 300Pb in this order and flows into the second heat sink 300b.

The second pack coolant discharge tube 1200b discharges the coolant from the coolant flow path formed by the second heat sink 300b. Specifically, the second pack coolant discharge tube 1200b may be connected to the coolant discharge port 520b. The coolant flowing into the second heat sink 300b passes between the other second module frame protrusion part 211b and the second heat sink protrusion part 300Pb and through the coolant discharge port 520b in this order to be discharged to the second pack coolant discharge tube 1200b.

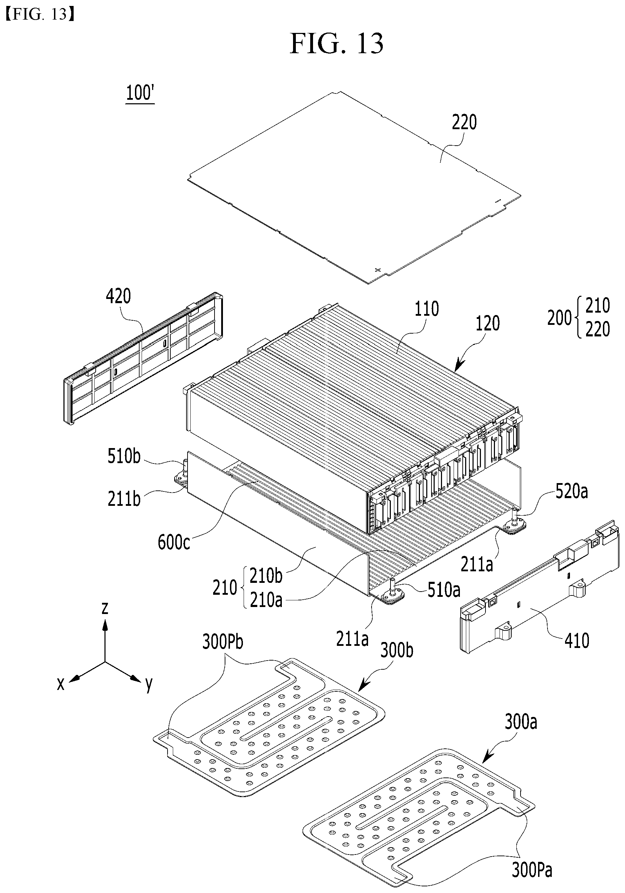

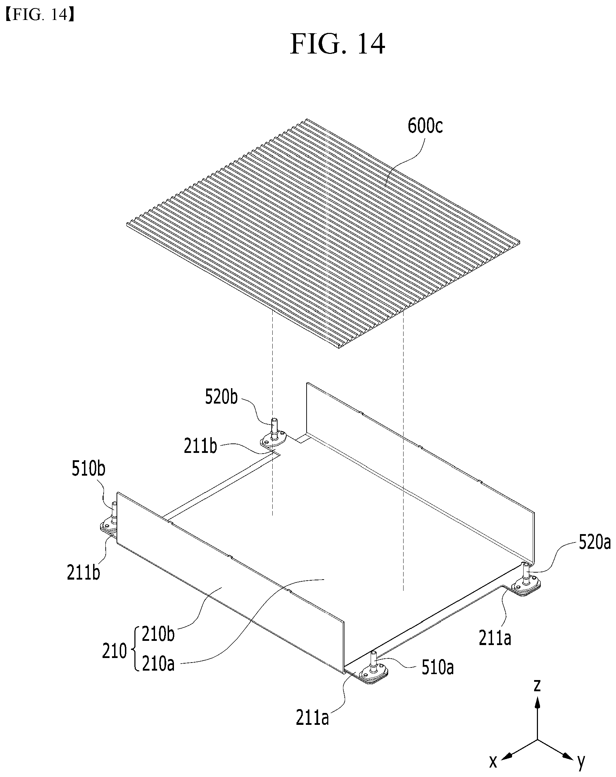

Next, a battery module according to another embodiment of the present disclosure will be described with reference to Figs. 13 and 14.

Fig. 13 is an exploded perspective view showing a battery module according to another embodiment of the present disclosure. Fig. 14 is a perspective view showing a lower frame and a thermal conductive resin layer included in the battery module of Fig. 13.

Referring to Figs. 13 and 14, the battery module 100' according to another embodiment of the present disclosure includes a battery cell stack 120 in which a plurality of battery cells 110 are stacked; a module frame 200 that houses the battery cell stack 120; and a first heat sink 300a and a second heat sink 300b that are located under the bottom part 210a of the module frame 200. The module frame 200 may include a lower frame 210 and an upper cover 220, and a first end plate 410 and a second end plate 420 may be disposed in each of the front surface and the rear surface of the battery cell stack 120. The details concerning each configuration overlaps with the contents previously described, and thus are omitted.

At this time, the battery module 100' according to the present embodiment may further include a thermal conductive resin layer 600c located between the lower surface of the battery cell stack 120 and the bottom part 210a of the module frame 200. A thermal conductive resin can be applied to the bottom part 210a of the module frame 200 to form a thermal conductive resin layer 600c. Details concerning the thermal conductive resin overlap with the contents previously described, and thus are omitted.

The battery module 100 described above includes a first thermal conductive resin layer 600a and a second thermal conductive resin layer 600b corresponding to the first heat sink 300a and the second heat sink 300b, whereas the battery module 100' according to the present embodiment may include a single thermal conductive resin layer 600c.

With respect to a direction perpendicular to one surface of the bottom part 210a of the module frame 200, the thermal conductive resin layer 600c according to the present embodiment covers a region where which the first heat sink 300a is located and a region where the second heat sink 300b is located.

That is, not only the thermal conductive resin layer 600c can cover the region where the first heat sink 300a is located and the region where the second heat sink 300b is located, but also it can cover the region located between them. Thereby, the heat dissipation performance in the central part of the battery cell 110 may be complemented.

In order to improve heat dissipation performance and minimize temperature deviation for each battery module based on the type, number, size, etc. of the applied battery cells 110, the first and second thermal conductive resin layers 600a and 600b or a single thermal conductive resin layer 600c may be selected and applied.

Even though the terms indicating directions such as front, rear, left, right, upper and lower directions are used herein, it is obvious to those skilled in the art that these merely represent for convenience in explanation, and may differ depending on a position of an observer, a position of an object, or the like.

The one or more battery modules according to the present embodiment as described above can be mounted together with various control and protection systems such as a battery management system (BMS) and a cooling system to form a battery pack.

The battery module or the battery pack can be applied to various devices. Specifically, these devices can be applied to vehicle means such as an electric bicycle, an electric vehicle, a hybrid vehicle, but the present disclosure is not limited thereto and can be applied to various devices that can use the secondary battery.

### [Description of Reference Numerals]

100: battery module
120: battery cell stack
210a: bottom part
300a: first heat sink
300b: second heat sink

## Claims

1. A battery module (100, 100') comprising:
a battery cell stack (120) in which a plurality of battery cells (110) including electrode leads (111, 112) protruding in mutually opposite directions are stacked;
a module frame (200) that houses the battery cell stack (120); and
a first heat sink (300a) and a second heat sink (300b) that are located under the bottom part (210a) of the module frame (200);
wherein the first heat sink (300a) and the second heat sink (300b) are located apart from each other along a direction parallel to a direction in which the electrode leads (111, 112) protrude;
wherein a coolant flow path is formed between the first heat sink (300a) and the bottom part (210a) of the module frame (200) and between the second heat sink (300b) and the bottom part (210a) of the module frame (200), respectively, and
wherein the coolant flow path formed by the first heat sink (300a) and the coolant flow path formed by the second heat sink (300b) are separated from each other.

2. The battery module according to claim 1,
which further comprises a first thermal conductive resin layer (600a) and a second thermal conductive resin layer (600b) that are located between the lower surface of the battery cell stack (120) and the bottom part (210a) of the module frame (200).

3. The battery module according to claim 2, wherein:
the first thermal conductive resin layer (600a) and the second thermal conductive resin layer (600b) are located apart from each other along a direction parallel to a direction in which the electrode leads (111, 112) protrude.

4. The battery module (100) according to claim 2, wherein:
the first heat sink (300a) is located at a portion corresponding to the first thermal conductive resin layer (600a), and the second heat sink (300b) is located at a portion corresponding to the second thermal conductive resin layer (600b), with respect to a direction perpendicular to one surface of the bottom part (210a) of the module frame (200).

5. The battery module according to claim 1, wherein:
the first heat sink (300a) comprises a first lower plate (310a) that is joined to the bottom part (210a) of the module frame (200), and a first recessed part (320a) that is recessed in a lower direction from the first lower plate (310a).

6. The battery module according to claim 1,
which further comprises a thermal conductive resin layer (600c) that is located between the lower surface of the battery cell stack (120) and the bottom part (210a) of the module frame (200).

7. The battery module (100') according to claim 6, wherein:
the thermal conductive resin layer (600c) covers a region where the first heat sink (300a) is located and a region where the second heat sink (300b) is located, with respect to a direction perpendicular to one surface of the bottom part (210a) of the module frame (200).

8. The battery module according to claim 1, wherein:
the module frame (200) comprises first module frame protrusion parts (211a) formed by protruding a part of the bottom part (210a) of the module frame (200), and
a coolant injection port (510a) is connected to any one of the first module frame protrusion parts (211a) and a coolant discharge port (520a) is connected to the other one (211a).

9. The battery module according to claim 8, wherein:
the first heat sink (300a) comprises first heat sink protrusion parts (300Pa) that protrude from one side of the first heat sink (300a) to portions where the first module frame protrusion parts (211a) are located.

10. The battery module according to claim 1, wherein:
the second heat sink (300b) comprises a second lower plate (310b) that is joined to the bottom part (210a) of the module frame (200), and a second recessed part (320b) that is recessed in a lower direction from the second lower plate (310b).

11. The battery module according to claim 1, wherein:
the module frame (200) comprises second module frame protrusion parts (211b) formed by protruding a part of the bottom part (210a) of the module frame (200), and
a coolant injection port (510b) is connected to any one of the second module frame protrusion parts (211b), and a coolant discharge port (520b) is connected to the other one (211b).

12. The battery module according to claim 11, wherein:
the second heat sink (300b) comprises second heat sink protrusion parts (300Pb) that protrude from one side of the second heat sink (300b) to portions where the second module frame protrusion parts (211b) are located.

13. A battery pack comprising:
the battery module (100, 100') according to claim 1;
a first pack coolant supply tube (1100a) that supplies a coolant to a coolant flow path formed by a first heat sink (300a);
a first pack coolant discharge tube (1200a) that discharges the coolant from the coolant flow path formed by the first heat sink (300a);
a second pack coolant supply tube (1100b) that supplies a coolant to the coolant flow path formed by the second heat sink (300b); and
a second pack coolant discharge tube (1200b) that discharges the coolant from the coolant flow path formed by the second heat sink (300b).

## Patentansprüche

1. Batteriemodul (100, 100') aufweisend:
einen Batteriezellenstapel (120), in dem mehrere Batteriezellen (110) mit Elektrodenleitungen (111, 112), die in zueinander entgegengesetzte Richtungen vorstehen, gestapelt sind;
einen Modulrahmen (200), der den Batteriezellenstapel (120) aufnimmt; und
eine erste Wärmesenke (300a) und eine zweite Wärmesenke (300b), die unter dem Bodenteil (210a) des Modulrahmens (200) angeordnet sind;
wobei die erste Wärmesenke (300a) und die zweite Wärmesenke (300b) entlang einer Richtung parallel zu einer Richtung, in der die Elektrodenleitungen (111, 112) vorstehen, voneinander beabstandet angeordnet sind;
wobei ein Kühlmittelströmungspfad zwischen der ersten Wärmesenke (300a) und dem Bodenteil (210a) des Modulrahmens (200) bzw. zwischen der zweiten Wärmesenke (300b) und dem Bodenteil (210a) des Modulrahmens (200) ausgebildet ist, und
wobei der Kühlmittelströmungspfad, der durch die erste Wärmesenke (300a) ausgebildet ist, und der Kühlmittelströmungspfad, der durch die zweite Wärmesenke (300b) ausgebildet ist, voneinander getrennt sind.

2. Batteriemodul nach Anspruch 1,
das ferner eine erste wärmeleitfähige Harzschicht (600a) und eine zweite wärmeleitfähige Harzschicht (600b) aufweist, die zwischen der unteren Oberfläche des Batteriezellenstapels (120) und dem Bodenteil (210a) des Modulrahmens (200) angeordnet sind.

3. Batteriemodul nach Anspruch 2, wobei:
die erste wärmeleitfähige Harzschicht (600a) und die zweite wärmeleitfähige Harzschicht (600b) entlang einer Richtung parallel zu einer Richtung, in der die Elektrodenleitungen (111, 112) vorstehen, voneinander beabstandet angeordnet sind.

4. Batteriemodul (100) nach Anspruch 2, wobei:
die erste Wärmesenke (300a) an einem Abschnitt angeordnet ist, der der ersten wärmeleitfähigen Harzschicht (600a) entspricht, und die zweite Wärmesenke (300b) an einem Abschnitt angeordnet ist, der der zweiten wärmeleitfähigen Harzschicht (600b) entspricht, bezüglich einer Richtung senkrecht zu einer Oberfläche des Bodenteils (210a) des Modulrahmens (200).

5. Batteriemodul nach Anspruch 1, wobei:
die erste Wärmesenke (300a) eine erste untere Platte (310a), die mit dem Bodenteil (210a) des Modulrahmens (200) verbunden ist, und einen ersten vertieften Teil (320a) aufweist, der in einer unteren Richtung von der ersten unteren Platte (310a) vertieft ist.

6. Batteriemodul nach Anspruch 1,
das ferner eine wärmeleitfähige Harzschicht (600c) aufweist, die zwischen der unteren Oberfläche des Batteriezellenstapels (120) und dem Bodenteil (210a) des Modulrahmens (200) angeordnet ist.

7. Batteriemodul (100') nach Anspruch 6, wobei:
die wärmeleitfähige Harzschicht (600c) einen Bereich, in dem die erste Wärmesenke (300a) angeordnet ist, und einen Bereich, in dem die zweite Wärmesenke (300b) angeordnet ist, bezüglich einer Richtung senkrecht zu einer Oberfläche des Bodenteils (210a) des Modulrahmens (200) bedeckt.

8. Batteriemodul nach Anspruch 1, wobei:
der Modulrahmen (200) erste Modulrahmenvorsprungsteile (211a) aufweist, die durch Vorstehen eines Teils des Bodenteils (210a) des Modulrahmens (200) gebildet sind, und
eine Kühlmitteleinspritzöffnung (510a) mit einem der ersten Modulrahmenvorsprungsteile (211a) verbunden ist und eine Kühlmittelabgabeöffnung (520a) mit dem anderen (211a) verbunden ist.

9. Batteriemodul nach Anspruch 8, wobei:
die erste Wärmesenke (300a) erste Wärmesenkenvorsprungsteile (300Pa) aufweist, die von einer Seite der ersten Wärmesenke (300a) zu Abschnitten vorstehen, wo die ersten Modulrahmenvorsprungsteile (211a) angeordnet sind.

10. Batteriemodul nach Anspruch 1, wobei:
die zweite Wärmesenke (300b) eine zweite untere Platte (31ob), die mit dem Bodenteil (210a) des Modulrahmens (200) verbunden ist, und einen zweiten vertieften Teil (320b) aufweist, der in einer unteren Richtung von der zweiten unteren Platte (310b) vertieft ist.

11. Batteriemodul nach Anspruch 1, wobei:
der Modulrahmen (200) zweite Modulrahmenvorsprungsteile (211b) aufweist, die durch Vorstehen eines Teils des Bodenteils (210a) des Modulrahmens (200) gebildet sind, und
eine Kühlmitteleinspritzöffnung (510b) mit einem der zweiten Modulrahmenvorsprungsteile (211b) verbunden ist und eine Kühlmittelabgabeöffnung (520b) mit dem anderen (211b) verbunden ist.

12. Batteriemodul nach Anspruch 11, wobei:
die zweite Wärmesenke (300b) zweite Wärmesenkenvorsprungsteile (300Pb) aufweist, die von einer Seite der zweiten Wärmesenke (300b) zu Abschnitten vorstehen, wo die zweiten Modulrahmenvorsprungsteile (211b) angeordnet sind.

13. Batteriepack aufweisend:
das Batteriemodul (100, 100') nach Anspruch 1;
ein erstes Packkühlmittelzufuhrrohr (1100a), das einem Kühlmittelströmungspfad, der durch eine erste Wärmesenke (300a) ausgebildet ist, ein Kühlmittel zuführt;
ein erstes Packkühlmittelabgaberohr (1200a), das das Kühlmittel aus dem Kühlmittelströmungspfad, der durch die erste Wärmesenke (300a) ausgebildet ist, abgibt;
ein zweites Packkühlmittelzufuhrrohr (1100b), das dem Kühlmittelströmungspfad, der durch die zweite Wärmesenke (300b) ausgebildet ist, ein Kühlmittel zuführt; und
ein zweites Packkühlmittelabgaberohr (1200b), das das Kühlmittel aus dem Kühlmittelströmungspfad, der durch die zweite Wärmesenke (300b) ausgebildet ist, abgibt.

## Revendications

1. Module de batterie (100, 100') comprenant :
un empilement de cellules de batterie (120) dans lequel une pluralité de cellules de batterie (110) comprenant des conducteurs d'électrode (111, 112) saillants dans des directions mutuellement opposées sont empilés ;
un châssis de module (200) contenant l'empilement de cellules de batterie (120) ; et
un premier dissipateur thermique (300a) et un deuxième dissipateur thermique (300b) situés sous la partie inférieure (210a) du châssis de module (200) ;
le premier dissipateur thermique (300a) et le deuxième dissipateur thermique (300b) étant séparés l'un de l'autre dans une direction parallèle à une direction dans laquelle les conducteurs d'électrode (111, 112) sont saillants ;
un conduit d'écoulement de réfrigérant étant formé entre le premier dissipateur thermique (300a) et la partie inférieure (210a) du châssis de module (200), et entre le deuxième dissipateur thermique (300b) et la partie inférieure (210a) du châssis de module (200), respectivement, et
le conduit d'écoulement de réfrigérant formé par le premier dissipateur thermique (300a) et le conduit d'écoulement de réfrigérant formé par le deuxième dissipateur thermique (300b) étant séparés l'un de l'autre.

2. Module de batterie selon la revendication 1,
comprenant en outre une première couche de résine thermo-conductrice (600a) et une deuxième couche de résine thermo-conductrice (600b) situées entre la surface inférieure de l'empilement de cellules de batterie (120) et la partie inférieure (210a) du châssis de module (200).

3. Module de batterie selon la revendication 2,
la première couche de résine thermo-conductrice (600a) et la deuxième couche de résine thermo-conductrice (600b) étant positionnées de façon à être séparées l'une de l'autre dans une direction parallèle à une direction dans laquelle les conducteurs d'électrode (111, 112) font saillie.

4. Module de batterie (100) selon la revendication 2,
le premier dissipateur thermique (300a) étant situé dans une partie correspondant à la première couche de résine thermo-conductrice (600a), et le deuxième dissipateur thermique (300b) étant situé dans une partie correspondant à la deuxième couche de résine thermo-conductrice (600b) relativement à une direction perpendiculaire à une surface de la partie inférieure (210a) du châssis de module (200).

5. Module de batterie selon la revendication 1,
le premier dissipateur thermique (300a) comprenant une première plaque inférieure (310a) jointe à la partie inférieure (210a) du châssis de module (200), et une première partie évidée (320a) évidée dans une direction inférieure depuis la première plaque inférieure (310a).

6. Module de batterie selon la revendication 1,
comprenant en outre une couche de résine thermo-conductrice (600c) située entre la surface inférieure de l'empilement de cellules de batterie (120) et la partie inférieure (210a) du châssis de module (200).

7. Module de batterie (100') selon la revendication 6,
la couche de résine thermo-conductrice (600c) couvrant une zone où est situé le premier dissipateur thermique (300a), et une zone où est situé le deuxième dissipateur thermique (300b), relativement à une direction perpendiculaire à une surface de la partie inférieure (210a) du châssis de module (200).

8. Module de batterie selon la revendication 1,
le châssis de module (200) comprenant des premières parties saillantes du châssis de module (211a) formées par la saillie d'une partie de la partie inférieure (210a) du châssis de module (200), et
un orifice d'injection de réfrigérant (510a) étant connecté à une quelconque des premières parties saillantes du châssis de module (211a) et un orifice d'évacuation de réfrigérant (520a) étant connecté à l'autre (211a).

9. Module de batterie selon la revendication 8,
le premier dissipateur thermique (300a) comprenant des parties saillantes du premier dissipateur thermique (300Pa) qui font saillie d'un côté du premier dissipateur thermique (300a) vers des parties où sont situées des premières parties saillantes du châssis de module (211a).

10. Module de batterie selon la revendication 1,
le deuxième dissipateur thermique (300b) comprenant une deuxième plaque inférieure (310b) jointe à la partie inférieure (210a) du châssis de module (200), et une deuxième partie évidée (320b) évidée dans une direction inférieure depuis la deuxième plaque inférieure (310b).

11. Module de batterie selon la revendication 1,
le châssis de module (200) comprenant des deuxièmes parties saillantes du châssis de module (211b) formées en mettant en saillie une partie inférieure (210a) du châssis de module (200), et
un orifice d'injection de réfrigérant (510b) connecté à une quelconque des deuxièmes parties saillantes du châssis de module (211b), et un orifice d'évacuation de réfrigérant (520b) étant connecté à l'autre (211b).

12. Module de batterie selon la revendication 11,
le deuxième dissipateur thermique (300b) comprenant des parties saillantes du deuxième dissipateur thermique (300Pb), qui font saillie d'un côté du deuxième dissipateur thermique (300b) vers des parties où sont situées des deuxièmes parties saillantes du châssis de module (211b).

13. Bloc-batterie comprenant :
le module de batterie (100, 100') selon la revendication 1 ;
un premier tube d'alimentation en réfrigérant du bloc (1100a) introduisant un réfrigérant dans un conduit d'écoulement de réfrigérant formé par un premier dissipateur thermique (300a) ;
un premier tube d'évacuation du réfrigérant du bloc (1200a) évacuant le réfrigérant du conduit d'écoulement du réfrigérant formé par le premier dissipateur thermique (300a) ;
un deuxième tube d'alimentation en réfrigérant du bloc (1100b) introduisant un réfrigérant dans le conduit d'écoulement du réfrigérant formé par le deuxième dissipateur thermique (300b) ; et
un deuxième tube d'évacuation du réfrigérant du bloc (1200b) évacuant le réfrigérant du conduit d'écoulement du réfrigérant formé par le deuxième dissipateur thermique (300b).
